# EUROPEAN PATENT APPLICATION

(11) **EP 0 642 001 A2**
(43) Date of publication of application: **08.03.1995**
(21) Application number: 94117883.2
(22) Date of filing: 20.08.1990
(51) Int. Cl.: G01F 3/10, G01F 15/00, G01F 15/14, G01F 15/06, F04C 2/08, F04C 2/12

(54) **Positive displacement flowmeter**

(62) Divisional of application: 90115929.3
(71) Applicant: Oval Engineering Co., Ltd., Shinjuku-ku, Tokyo (JP)
(72) Inventor: Asanuma, Yoshio, c/o Oval Engineering Co., LTD, Shinjuku-ku, Tokyo (JP); Yokota, Fumio, c/o Oval Engineering Co., LTD, Shinjuku-ku, Tokyo (JP); Tsuchiya, Hironari, c/o Oval Engineering Co., LTD, Shinjuku-ku, Tokyo (JP); Miyagawa, Yasuniro, c/o Oval Engineering Co., LTD, Shinjuku-ku, Tokyo (JP); Fuji, Hiroshi, c/o Oval Engineering Co., LTD, Shinjuku-ku, Tokyo (JP); Hayakawa, Osamu c/o Oval Engineering Co., LTD, Shinjuku-ku, Tokyo (JP); Hotta, Koji, c/o Oval Engineering Co., LTD, Shinjuku-ku, Tokyo (JP)
(74) Representative: Grünecker, Kinkeldey, Stockmair & Schwanhäusser Anwaltssozietät

(57) **Abstract**

A positive displacement flowmeter comprising a flowmeter portion including a pair of rotors rotatable in proportion to a fluid's flow in a measuring chamber and a counting portion for measuring a total flow by counting the rotor's rotations. It has many improvements. Firstly, the flowmeter is protected against the penetration of rain water into its counting portion. Furthermore, the counting portion housing is so constructed as to assure the easy mounting of an electric circuit and like components therein and also the possibility to control said circuit from the outside of the housing by use of reed switches and the like. The flowmeter is improved not to transfer heat of a fluid of high temperature to the counting portion and, furthermore, to assure the easy mounting of rotors in the measuring chamber. Particularly, it is possible to provide high performance rotors mounted in the measuring chamber by using non-circular gears having a special tooth profile and made of special materials. Other various improvements are presented.

## Description

### BACKGROUND OF THE INVENTION

Conventional type flowmeters, each of which has an indicator unitarily attached to its body and is connected to a pipe by means of flanges or like joining means, are generally used for measuring and indicating the fluid's flow by processing a flow-rate signal from a measuring portion. There have been many applications of positive displacement flowmeters of this type. The positive displacement flowmeter, operating on the principle of a constant volume of fluid discharged by a rotor rotating in a measuring chamber of the flowmeter's body, is usually mounted with its rotor shaft horizontally positioned so as to correctly measure the fluid's flow-rate proportional to the rotation of the rotor without causing any undesirable rolling friction. Furthermore, when the flowmeter is mounted on the piping, its indicating portion is attached to the flowmeter's body horizontally along the axis of the flowmeter so as to vertically dispose the indicating panel for easily reading it.

The positive displacement flowmeter's body is attached at its flanges to a pipeline through which a fluid to be measured flows. A counting portion having the function of processing the flow-rate's signal and to indicate the value obtained is accommodated in an outer housing which is removably attached to the flowmeter's body through an outer connecting housing with setscrews in deeply counter-bored holes in the outer housing. However, in the case where the flowmeter is mounted on outdoor piping, rain water may accumulate in the deeply counter-bored holes and penetrate through the threaded portions of the set-screws into a small clearance between the inserted pipe of the outer indicator housing and the inserted hole of the outer housing, which during a long period of time may exert an adverse effect on the inner devices of the counting portion and also make it impossible to remove the inserted part of the outer indicator housing from the connecting housing due to the rusting of its inserted part.

The outer indicator housing, accommodating therein the circuit components such as a preamplifier for amplifying the flow-rate signal, is composed of a body portion having a closed bottom for placing the circuit components thereon and a sealing cover threadably attached to the body to protect the circuit components from moisture affection. Said housing has at its inner bottom an integrally made and concentrically protruding supporting portion whereto a circuit board with circuit components mounted thereon is attached by using supporting columns and screws. The circuit board with circuit components is mounted on the supporting columns in the housing and closed by a cover member. However, if any circuit component in the housing has to be replaced with a new one out-of-doors in the rain, rain water may penetrate into the housing since it takes time for threadably mounting the circuit board onto the supporting columns in the housing.

A reed switch is used for externally operating the preamplifier and other circuit components on the circuit board in the housing, since it can be switched ON and OFF by use of a magnet, can be simple in construction and especially adapted for use in a drip-proof and explosion-proof situation.

This reed switch is mounted in a housing made of non-magnetic material and provided with a push-button arranged on the outer surface of the housing in such a way that the switch's body and the push-button are facing each other across a partition wall. The push-button is normally kept apart from the reed switch by the force of a spring in the push-button casing on the outside of the housing and a permanent magnet is integrally attached to the push-button on the side adjacent to the reed switch. The reed switch is mounted on the partition wall in such a way that it is disposed opposite the permanent magnet parallel with the axis thereof. When the push-button is pressed against the spring force to make the magnet approach the reed switch, the magnet causes the reed switch to be ON. The push-button has to move reciprocally in the push-button casing. However, such problems may arise so that the mechanism cannot realize the smooth reciprocation of the push-button and, furthermore, the magnet directly attached to the molding material of the face of the push-button may easily drop off.

In the instructions on explosion-proof constructions of electric equipment for factories, which have been established in order to ensure the safety of electric equipment installed at dangerous places with possibly explosive atmospheres, the shroud construction of the explosion-proof container has been standardized. The explosion-proof container is a metal pressure-vessel capable of withstanding the pressure specified depending on its volume. A cover for this pressure vessel is joined to the vessel's body thereby maintaining a specific size of the joined surfaces. The cover is secured to the pressure vessel by using bolts with washers in deeply counterbored holes drilled in a plane portion of the cover. In the case where the vessel's cover, joined thereto by use of bolts with their heads buried deeply in counterbored holes is installed outdoors, rain water may collect in the deeply counterbored portions of the holes to wet the bolts' heads and then evaporate thereby causing a gradual corrosion of the bolts and joined metal surfaces by the repeated atmospheric conditions.

The flowmeters are basically designed to be of an explosion-proof construction since they may be frequently used for the measurement of the flow of explosive fluids or at places specified as having a dangerous atmosphere. However, the manufacturing cost of the flowmeters increases to satisfy the requirements for an explosion-proof construction of pressure vessels in relation to a specified volume, specified sizes of joined surfaces with a specified allowance, lead-in wires, the separation of containers accommodating electrical devices etc..

On the other hand, recently many flowmeters of such a type, which process a flow-rate signal transmitted from a flowmeter's body and indicate the calculated value, have been adopted. The application of flowmeters incorporating a battery as a source of energy for signal generation, calculation and indication has also been increased. The above-mentioned electric circuit of the flowmeter which is of a battery-operated type requires only a small current supply and consumes a small amount of electrical energy, thereby being intrinsically adapted to explosion-proof applications. The battery, adapted for intrinsically safe circuits, is provided with a current-limiting resistance or a like element serially connected thereto to prevent an over-load of current from occurring across a short circuit formed by a malfunction and furthermore it is placed in a suitable vessel. It is also required that the battery unit, for use at a hazardous place, shall include a current-limiting element and be replacable in the form of a complete unit. Such a power supply unit is connected to the electrical circuit by the use of a connecting means such as a plug and connector, removably secured to a partition wall and operated from a switch mounted on the electrical circuit side.

The battery unit is provided with a resistor or a like current-limiting element connected thereto by embedding the connections in a molded material but the other terminal of the battery and the open terminal of the resistor are connected by a connecting means to the electrical circuit through a switching means. Consequently, leaking current may flow through the connecting means and circuit components, such as a switch, even when the circuit is not in operation. This causes an acceleration in the deterioration of the battery. Furthermore, since the switch mounted on the electric circuit is operated by hand each time it is switched OFF and ON, especially after a long OFF period, the electric circuit may become exposed to the atmosphere. This is undesirable from the viewpoint of assuring the safety and durability of the device.

As mentioned above, the positive displacement flowmeter is constructed in such a way that in a measuring chamber of the flowmeter's body installed in a pipe line through which the fluid flows a rotor is rotatably mounted keeping a small clearance thereabouts and is capable of rotating therein at a rate proportional to the flow rate of the fluid, the rotor's rotation is sensed by a sensing means and then the calculated flow-rate value is indicated by an indicating means. In many cases a system for converting a rotor's rotation into an electrical signal is adopted as the means for sensing the rotor's rotation. For example, the magnetic flux from a transmitting magnet embedded in the face of the rotor is sensed by a magnetic sensor which in turn generates an electric signal to be transmitted as a pulse signal of the flow's rate. The pulse signal is processed by an electrical transducer mounted in a counting portion made unitarily with the flowmeter's body and then is indicated by an indicator or transmitted to a remote place. There are various kinds of fluids to be measured by the flowmeter in a variety of physical or chemical conditions such as pressure, temperature etc. For example, the temperature of a fluid may vary in a wide range from low to high. This means that the operating circuit of the counting portion has to operate well at temperatures varying within a wide range. Since the counting portion is directly connected to the flowmeter's body, it may be effected by the thermal conduction and radiation if the fluid is hot. Accordingly, in this case it is necessary to protect the counting portion from the possible effect of heat by interposing heat insulation between the measuring portion and the counting portion. The heat insulation is made in the form of a hollow square pipe of mainly inorganic material having a high resistance to heat and low thermal conductivity such as rock wool etc.

The above-mentioned positive displacement flowmeter has heat insulation protecting it for shutting out the flow of heat from the flowmeter's body. However, the heat insulation provided is available to shut off heat transfer by conduction but it cannot prevent heat transfer by radiation. Consequently, the radiant heat from the flowmeter's body is directly transferred to the bottom of the counting portion wherein the temperature rises, resulting in that air in the closed space of the counting portion is heated and thereby expands to increase the inner pressure. A part of the air under increased pressure is discharged out of the counting portion through the heat insulation of the capillary-type structure. Therefore, air from the outside flows into the counting portion after the flowmeter stops and its temperature is lowered. Such respiration increases the humidity of the air in the counting portion causing the condensation of moisture therein at a low ambient temperature. Although there are capillaries in the heat insulation most of them are closed and cannot allow the counting portion to communicate with the outside air. This poses the problem that the temperature rises in the counting portion and is irrevocable.

The measuring chamber of the positive displacement flowmeter communicates with an inlet and an outlet of the flowmeter and accommodates a pair of rotor shafts of the same diameter, each of which is provided with a non-circular gear. Each rotor shaft has one end formed in the shape of a column having a flange secured with bolts to the outer wall surface of the outer housing of the flowmeter's body, and has its other end extending through a hole at the bottom of the measuring chamber. Paired rotor shafts are arranged parallel to each other in the measuring chamber. The rotor shafts have gears of a non-circular shape and are rotatably mounted thereon one by one respectively and engaged with each other. The rotor shafts are fixed on a face plate having two holes wherein the other ends of the shafts are inserted respectively. The face plate is secured to the outer housing of the flowmeter's body by use of locating pins. Furthermore, the face plate is enclosed by a back cover which is threadably secured to the outer housing of the flowmeter's body with a liquid-tight O-ring provided there-between.

In the above-mentioned conventional positive displacement flowmeter, its rotor shafts are secured at their flanged ends to the outer housing of the flowmeter's body. The flanged shafts are large in size and expensive. Furthermore, since said shafts are held at the other ends, loosely fitted in corresponding holes of the face plate, the liquid may leak through a minute gap formed between the shaft and the hole of the face plate. To prevent the liquid leakage, it is needed to add a back cover sealed with an O-ring, thereby increasing the cost of the flowmeter.

Non-circular gears which are used in pairs as a rotor for the positive displacement flowmeter have teeth cut by a basic straight rack at a constant pressure angle. The teeth's profile is an involute obtained as a trace of rolling contact between a straight line of the basic rack and a pitch curve of the non-circular gear, i.e. the gear teeth are cut according to a non-circular pitch line with partial curved centers. Accordingly, the partial curved center of the non-circular pitch line does not coincide with the rotating center of the non-circular gear. When the non-circular gear is manufactured by the powder metallurgy compression molding method, metal in a mold during the compression process is subjected to radial outward pressure from the rotating center of the non-circular gear. Consequently, the powder metal density of each tooth's surface of the molded work may be different at opposite sides, i.e. it has a higher density at one side and a lower density at the other side. The work is sintered to form a non-circular gear with its teeth bent toward the surface side of the lower powder-metal density.

When the deformed non-circular gear is compressed in a metal mold in the next process, it receives a reverse force to its teeth from the other side for straightening its teeth surfaces in accordance with the mold. This poses the problem that the gear's teeth may crack due to the straightening force in the molding or the damaging of its teeth's surface due to excessive friction at the time of extruding the gear from the mold.

In the positive displacement flowmeter the rotor's rotation is indicated mechanically through reduction gears and electrically through a rotation sensor converting it into an electrical signal. Many optical sensors or magneto-electric transducer type contactless ones are applied for directly sensing the rotation of the rotor. There are two types of optical sensors - reflecting and transmitting. However, these optical sensors can be applied only to light-transmitting fluids, the kinds which may be limited. On the other hand, magneto-electric transducer type sensors can be applied to many kinds of fluids and, therefore, are preferable for adoption in many positive displacement flowmeters. Magnetic sensors such as a hall device, magnetic resistance and so on are used as a magneto-electric transducer which is capable of sensing the magnetic flux from a transmitting magnet embedded in a rotor of the flowmeter.

However, the above-mentioned magnetic sensors cannot be applied to magnetic fluids affecting the distribution of magnetic flux of the transmitting magnet and are also limited by its working temperature. Usually, magnetic sensors of this type can operate at relatively low temperatures (max. working temperature of about 80 - 100°C) and therefore in many cases cannot directly detect the rotor's rotation. In addition, they must be provided with respective power supply sources. This means that in the case of the long-term measurement of fluid by a simple method, for example, when an integrating flowmeter with battery power is being used for the measuring of the total flow of drinking water or of city gas, the addition of a power supply of the sensor unit increases the manufacturing and running costs of the flowmeter and restricts its field of application.

The positive displacement flowmeters, wherein a magnetic flux generated by a transmitting magnet embedded in a rotor face is sensed by a magnetic sensor mounted on an outer housing, are capable of directly detecting the rotor's rotations and assures simple and accurate measurements of the fluid's flow by virtue of its small detection load. However, the flowmeters of this type, as well as other types mentioned above, have the disadvantage that their bodies must be exchanged with other bodies incorporating rotors that are similar in form but different in size depending on the specified range of the fluid's flow to be measured.

### SUMMARY OF THE INVENTION

It is an object of the invention to provide a positive displacement flowmeter which is so constructed as to simply and quickly accommodate a circuit board with a minimum number of components to be mounted thereon in a housing.

It is another object of the invention to provide a positive displacement flowmeter having a reed switch provided with a smoothly operable push-button of a simple construction.

It is a further object of the invention to provide a positive displacement flowmeter wherein a first-member having deeply counterbored through-holes drilled therein and a second-member having threaded partially drilled not-through holes aligned with the corresponding through-holes in the first member are threadably connected with each other by the use of bolts and spring washers and a provision is made to discharge rain water standing in the deeply counterbored portions of the through-holes in the first member.

It is still a further object of the invention to provide a positive displacement flowmeter wherein the electric system comprises an electric power unit including a battery potted in resin together with a serially connected thereto limiting resistance of a specified value, an electric circuit to be energized with current from the electric power unit and a switch for switching the electric power unit ON and OFF, the electric power unit and the electric circuit being accommodated in an electric device's housing and an internal part of the switch being also operable (ON-OFF control) and embedded in resin with a high insulation resistance and united with the electric power unit to assure that there is no consumption of the battery's charge while the battery is not in use and the electric circuit can be switched on in its sealed state.

It is another object of the invention to provide a positive displacement flowmeter which is capable of preventing heat from being transferred by conduction and radiation from the flowmeter's body, wherein a hot fluid flows, to a counting portion, thereby preventing a rise in temperature of the electric circuit mounted in the counting portion.

A further object of the invention is to provide a positive displacement flowmeter which is so constructed as to be able to easily mount the shafts of a rotor rotating at a rotating speed proportional to the flow rate of the fluid flowing in a measuring chamber by simplifying their fixed construction, thereby lowering the cost of the flowmeter in relation to the materials used and the assembling time.

A further object of the invention is to provide a positive displacement flowmeter wherein a higher productivity is achieved through the selection of suitable materials and a tooth profile of non-circular gears rotating in accordance with the flow rate of the fluid flowing inside the measuring chamber.

It is another object of the invention to provide a positive displacement flowmeter which is capable of measuring with a high reliability the flow rate of a fluid of a high temperature by adopting an amorphous magnetic sensor which does not require a power supply and which is capable of generating a pulse signal of the flow-rate in response to the magnetic flux from a magnet embedded in a rotor's face.

It is still another object of the invention to provide a positive displacement flowmeter which has a rotor including a magnet embedded therein and a sensor that is sensitive to the magnet and mounted on the outer housing, facing the magnet and which assures a constant mounting position of the sensor irrespective of the flowmeter bore's diameter.

### BRIEF DESCRIPTION OF THE DRAWINGS

Figure 1 is a sectional view taken along line VIII-VIII of Fig.2 showing an example of a prior art for mounting electric circuit components in a housing;
Figure 2 is a section taken on line IX-IX in Fig.1;
Figures 3 to 6 show an embodiment of the present invention consisting of improvements of the prior art shown in Fig.1. Figure 6 is a section taken on line XIII-XIII in Fig.12;
Figure 7 is a sectional side view of a conventional push-button switch;
Figure 8 is a sectional view taken along line XV-XV of Fig.7;
Figure 9 is a perspective view from the rear of the push-button;
Figure 10 is a sectional side view showing the construction of a push-button switch, according to the present invention;
Figure 11 is a sectional view taken along line XVIII-XVIII of Fig.10;
Figure 12 is a perspective view from the rear of the push-button;
Figure 13 is a sketch showing a method of holding a magnet;
Figure 14 is a view showing an example of a shrouding construction of an explosion-proof vessel.
Figures 15 and 16 are illustrations of a jointing construction according to the present invention. Figure 15 is a sectional side view taken on line XXII-XXII in Fig.16, and Figure 16 is a sectional side view taken on line XXIII-XXIII of Fig.15;
Figure 17 is a circuit diagram of an electric power supply unit;
Figure 18 is a construction view of an electric power supply unit incorporating the circuit shown in Fig.17;
Figures 19 and 20 are sketches for explaining a conventional positive displacement flowmeter. Figure 19 is a section taken on line XXVI-XXVI in Fig.20, and Figure 27 is a section taken on line XXVII-XXVII in Fig.19;
Figures 21 and 22 are views for explaining a positive displacement flowmeter embodied in the present invention. Figure 21 is a section taken on line XXVIII-XXVIII in Fig.22, and Figure 22 is a section taken on line XXIX-XXIX in Fig.21;
Figure 23 is a view showing the construction of a measuring portion of a conventional positive displacement flowmeter, and Figure 24 is a sectional view of a measuring portion of a positive displacement flowmeter according the present invention;
Figure 25 is a view showing in detail a shaft's construction. Figure 26 is a view showing an example of a shaft fixture, and Figure 27 is a section taken along line XXXIV-XXXIV of Fig.25;
Figure 28 is a view for explaining an example of a non-circular gear used in a conventional positive displacement flowmeter, and Figure 29 is a view for explaining an example of a non-circular gear used in a positive displacement flowmeter according to the present invention;

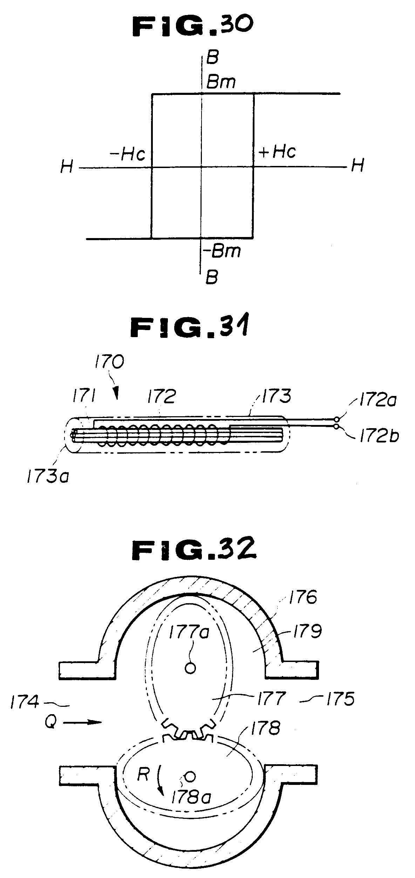

Figure 30 shows the magnetic characteristics of a magnetic sensor. Figure 31 is a construction view of a magnetic sensor used in a positive displacement flowmeter, according to the present invention;
Figure 32 is a view for explaining an outline of a positive displacement flowmeter wherein non-circular gears are adopted;
Figure 33 and 34 are views for explaining flow-rate transmitters according to the present invention. Figures 35 to 38 are views showing other embodiments of flow-rate transmitters;
Figure 39 is a view showing an example of a positive displacement flowmeter to which the present invention applies and is a section taken along line XLVI-XLVI of Fig.40. Figure 40 is a section taken along line XLVII-XLVII of Fig.39;
Figures 41 to 44 are views for explaining a conventional transmitting system;
Figures 45 to 48 are views for explaining the relative positions of a transmitting magnet and a magnetic sensor in a transmitting system of a positive displacement flowmeter, according to the present invention; and
Figures 49 to 51 are views for explaining other embodiments of the present invention.

### DESCRIPTION OF PREFERRED EMBODIMENTS

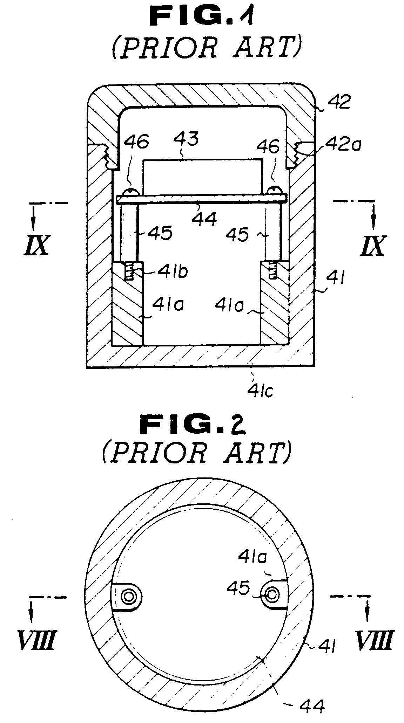

Fig.1 is a view showing a mechanism for easily locking a circuit board with components mounted thereon in the device housing. The electric circuit components such as a preamplifier etc. are usually accommodated in a housing and secured therein by means of the device shown in Fig.1. Fig.1 is a section taken along line VIII-VIII of Fig.2, while Fig.2 is a section taken along line IX-IX of Fig.1. In the drawings, a housing 41 for accommodating the circuit components 43 has a bottom 41c whereon supporting aprons 41a are formed unitarily with the inner wall of the housing 41, protruding inwardly toward the axis of the bottom 41c. A sealing cover 42 is threadably secured at its threaded part 42a to the housing 41 to prevent the humidity from entering therein and effecting the circuit components 43 mounted on a circuit board 44. The circuit board 44 with the circuit components are secured to the supporting aprons 41a through corresponding supporting columns 45 by placing screws 46 into the threaded holes 41b in the supporting aprons 41a. The circuit board 44 with the circuit components mounted thereon is thus secured to the supporting aprons 41a by means of supporting columns 45 in the housing closed with a cover 42. However, since in the above-mentioned housing the circuit board 44 together with supporting columns 45 are threadably secured to the supporting aprons 41a, it takes considerable time to replace any circuit component with a new one and therefore, if the replacement is made outdoors in the rain, the rain water may penetrate into the housing 41.

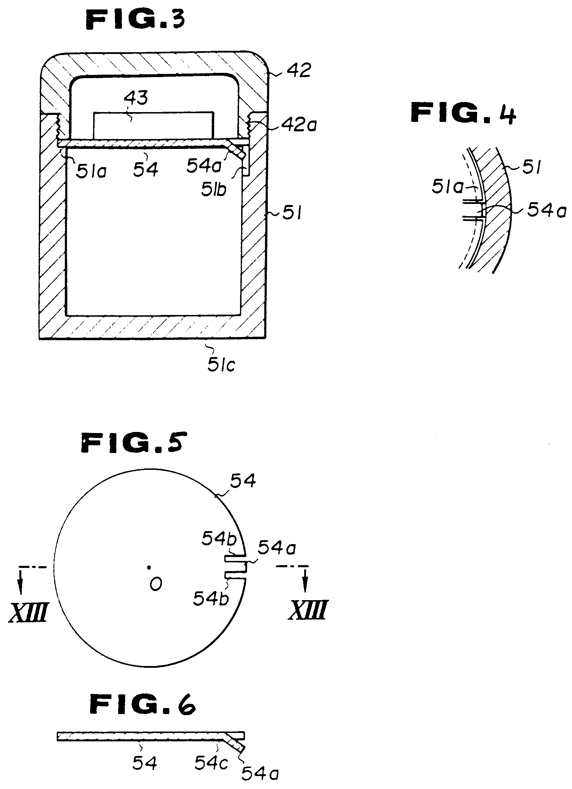

An embodiment shown in Figs.3 to 4 was made in order to eliminate the above-mentioned drawbacks by minimizing the number of elements to be incorporated into the housing 41 and by improving the locking structure making it capable of easily and quickly mounting the circuit board. Parts similar to those of the prior art shown in Fig.1 are indicated by corresponding characters and excluded from further description. In Fig.3, numeral 51 indicates a cylindrical housing having a bottom 51c, which is provided with a ring seat 51a at its inner cylindrical surface. Said ring seat 51a has vertical slots 51b of a specified length drilled in a portion thereof toward the bottom 51c. A circuit board 54 is shown in detail in Figs.5 and 6. Fig.5 is a plane view, and Fig.6 is a section taken along line XIII-XIII of Fig.5. The circuit board 54 is a plate having notches 54b cut parallel to each other in a radial direction from the centre 0 in such a way as to form a rectangular tongue 54a which is bent downwards at its base portion 54c. Electrical parts 43 are secured onto the circuit board 54 which in turn is mounted on the ring seat 51a made at the inner wall of the housing 51 in such a way that the bent rectangular tongue 54a of the circuit board 54a is inserted in the vertical slot 51a made on the inner wall of the housing.

Fig.4 is an enlarged detail of the inserted portion of the circuit board 54. In Fig.4, the bent rectangular tongue 54a is locked in the vertical slot 51b not to allow the circuit board to move in a circumferential direction. However, since in this condition the circuit board 54 may still move in a vertical direction, a cover 42 is threadably attached to the housing so as to fix the circuit board between said cover 42 and the ring seat 51a. As mentioned above, the circuit board 54 is locked in place by the ring seat 51a and the vertical slot 51b so as to become immobilized in both circumferential and vertical directions. Although in the above-mentioned case the cover 42 is threadably attached to the housing 41, it is also possible to adopt another means for fixing the cover 42 to the housing, as for example, by using the ring seat and bolts.

As is apparent from the foregoing description, according to the present invention, it is possible to easily lock the circuit board in the housing by adopting a low cost and easy-to-use fixing structure wherein the circuit board, including the circuit components mounted thereon and having the rectangular tongue simply made in a radial direction at its circumference, is placed on the ring seat by inserting its tongue in the vertical slot and then being secured by the cover which is threadably secured to the housing to firmly abut the circumference of the circuit board against the ring seat.

A reed switch is usually adopted for operating thus-mounted circuit components from the outside of the housing. Since the reed switch can be switched ON and OFF by use of a magnet and is simple in construction, it is especially adapted for use in drip-proof and explosion-proof applications.

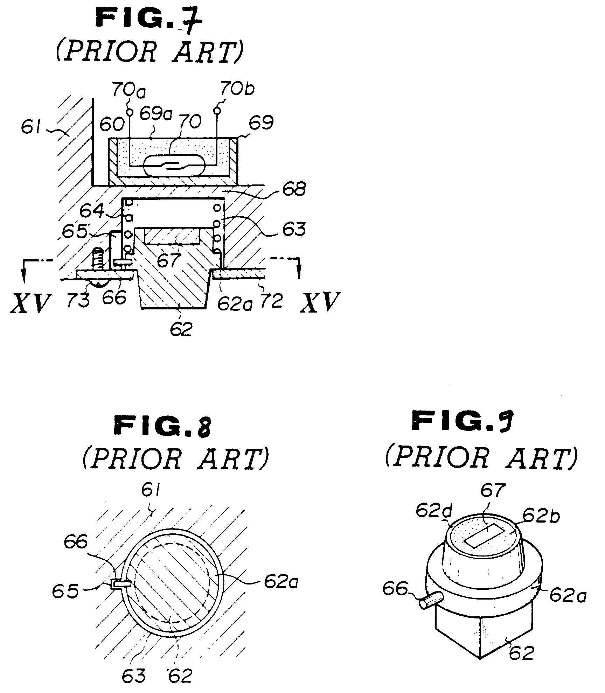

Fig.7 shows a conventional push-button switch. Numeral 61 indicates a cross-section of a main portion of the housing made of a non-magnetic material, wherein the circuit board is mounted. Fig.8 is a section taken along line XV-XV of Fig.7. The housing 61 includes a reed switch chamber 60 and push-button chamber 63 which are separated from each other by a partition 68. A push-button 62 made of a non-magnetic material is mounted as being extended by the force of a spring 64 in the push-button chamber 63. A plate 72 is used for abutting the spring 64 against the outer surface of the collar 62a of the push-button 62.

Fig.9 is a perspective view showing the push-button 62 from its back side. The collar 62a of the push-button is a guide ring having a pin 66 which at one end is fitted in the cylindrical side wall of the collar and at the other end is inserted into a guide slot 65 vertically made on the inner wall of the push-button chamber. The push-button 62 is inserted in the push-button chamber 63 keeping a small gap there-between. A square-rod magnet 67, magnetized in its axial direction, is embedded with molding material 62b, e.q. resin, in an upper ring 62d of the push-button 62 in such a way that the upper surface of the magnet is substantially flush with the upper ring face 62d of the push-button. A reed switch 70 is potted with resin 69a in a holder 69 made of a non-magnetic material, which is secured to the partition wall 61 in such a way that it is disposed opposite the magnet 67 in parallel with the axis thereof. When the push-button 62 is pressed against the force of the spring 64 to move the pin 66 along the guide slot 65, the magnet 67 approaches the reed switch 70 and puts the reed switch ON. The reed switch 70 is provided with terminals 70a and 70b. The above-mentioned structure makes it possible to control the reed switch 70 in a state of being separated from the outside by the partition wall 61. In order to ensure the smooth movement of the pin 66 fitted in the collar 62a along the guide slot 65 when the push-button 62 is pressed and released, it is necessary to correctly fit the pin 66 in the side wall of the collar 62a without bending and also to always keep a constant angle of positioning the pin 66 against the magnet 67. However, the above-mentioned conditions were hardly achieved, since the push-button 62 and its collar 62a have a slight gap there-around in the cylindrical cavity of the push-button chamber. Furthermore, there was the problem that the magnet 67, directly attached to the molding material of the face of the push-button, easily dropped off.

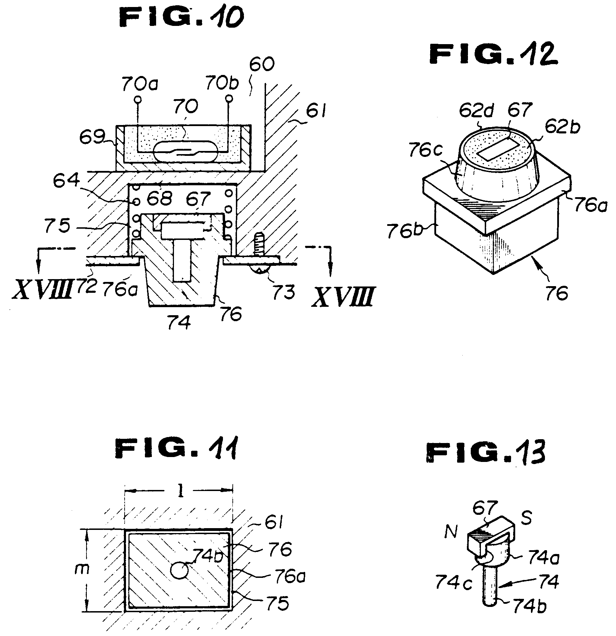

Fig.10 is a view for explaining an example of a push-button which is designed to be free from the above-mentioned drawbacks of the prior art by eliminating the necessity of fitting the pin 66 in the cylindrical outer surface of the collar 62a and also of cutting the guide slot in the inner wall of the housing, thereby achieving its smooth reciprocal movement. In Fig.10, elements similar to those of the prior art shown in Fig.7 are indicated by the same corresponding characters and excluded from further description. The push-button chamber 75, as shown in Fig.11 (a section taken along line XVIII-XVIII of Fig.10), has a rectangular cross-section of "l" in width and "m" in length (l=m). The push-button 76 is provided with a flange 76a which is slightly smaller in diameter than the push-button chamber 75 and therefore is loosely insertable into the chamber 75.

Fig.12 is a perspective view showing the push-button 76 from its back side. The push-button comprises a center flange 76a receiving the force of the pressure-spring 64 and abutting to a plate 72, a push-button body 76b projecting outwardly from the plate 72, and an inserted portion 76c having embedded therein a magnet 67 inserted in the push-button chamber 75. The inserted portion 76c of the push-button is a cone-shaped frustum which has a smaller diameter at its face 62d to enable it to be smoothly pushed into the cylindrical compression spring 64 without causing any interference to the spring in its compressed state. In the embodiment shown, the magnet 67 is fixed on a holding column 74 to prevent the magnet from falling and is embedded in a molding material 62b in the frustum in such a way as to be flush with the face 62d thereof.

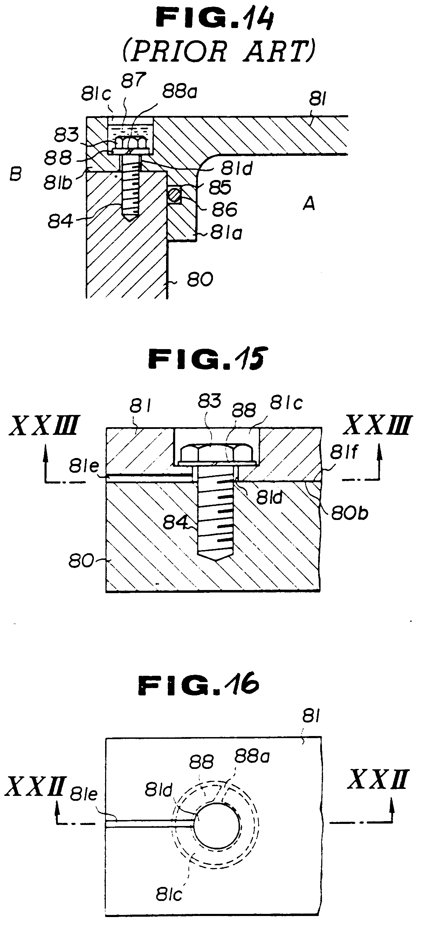

Fig.13 shows the relationship between the magnet 67 and the holding column 74 consisting of a column 74b and a holding portion 74a which is of a larger diameter than that of the column 74b and which has a groove 74c cut into its plane for adhesively fitting therein the square-pole shaped magnet 67. The depth of the groove 74c is smaller than the thickness of the square-pole shaped magnet 67, and the holding portion 74a is completely embedded in the layer of molding material 62b in order not to allow the magnet 67 to fall out of the molded layer 62b.

The push-button chamber 75 shaped in a rectangular cross-section and the push-button 76 having a flange portion 76a of a like rectangular cross-section, can be instantly formed respectively through die-casting or resin-molding methods with no additional need for machining of the push-button 76, thereby the manufacturing cost of the push-button switch is lowered. Furthermore, the push-button can be correctly mounted in the push-button chamber by positioning its rectangular flange 76a so as to correctly dispose the magnet 67 parallel with and opposite to the reed switch 70. The magnet 67 together with the holding column is unitarily potted in the push-button so as to eliminate the possibility of its falling out from the push-button. Such a constructed push-button switch is reliable, easy-to-make, low cost and adaptable to water-proof and explosion-proof use.

In the regulations on the explosion-proof construction of electric equipment for use in factories, established to ensure the safety of electric equipment installed at hazardous places where there exists an explosive atmosphere, the locking construction for the explosion-proof vessels is standardized.

Fig.14 shows an example of the locking mechanism for an explosion-proof vessel. Numeral 80 designates a pressurized metal vessel designed for a specific pressure and a specific volume and which has a cover 81 which is attached to the cylindrical portion 81a and the plane portion 81b of the pressure vessel 80. The clearances between the matched surfaces of the vessel's body and the cover correspond in size and clearance to the requirements specified by the regulations. The cover 81 has a ring slot 85 for fitting therein an O-ring to seal against the penetration of rain water into the vessel. The cover 81 is secured at its plane portion 81b to the pressure vessel 80 by use of a bolt 83 provided with a spring washer 88 through respective holes 81d having a deeply counterbored part 81a drilled in said plane portion 81b. Each hole has a thread 84 to engage with the bolt 83. Although the above-mentioned structure relates to a method for locking the cover 81 to the explosion-proof vessel 80, in many ordinary structures like locking methods are applied for jointing the members' surfaces with counterbored holes by using bolts.

In cases where the vessel, having the cover jointed thereto by the use of bolts with their heads sunk deeply in counterbored holes as shown in Fig.14 is installed outdoors, rain water 87 may collect in the deeply counterbored portions 81c of the holes, evaporate on a fine day with this cycle repeating itself causing a gradual propagation of corrosion of the bolts 83 and the jointed metal surfaces 81b.

Figs.15 and 16 show an example of a jointing structure wherein the first-element having a counterbored hole made therein and a second-element having a threaded blind hole matching with said counterbored hole are connected with each other by the use of a bolt, and wherein at least one of the jointed surfaces of the first and the second elements has a groove made thereon starting from the counterbored hole and terminating at the external surface of the housing exposed to the outside atmosphere in order to solve the above-mentioned problems. Construction elements similar to those shown in Fig.14 are indicated by corresponding like numerals and will not be further explained. Fig.15 is a sectional side view taken on line XXII-XXII of Fig.16, and Fig.16 is a section taken on line XXIII-XXIII of Fig.15. In these drawings, numeral 81 is a first-element (base element) having a flat surface 81f and numeral 80 is a second-element (pressure vessel) having a flat surface 80b to be joined with the flat surface of the first element. A blind hole with an internal thread 84 is provided in the flat surface 80b of the second element 80, and a groove 81e communicating with a bolt hole 81c and an end face B exposed to the atmosphere is provided in the first element 81. The first element 81 and the second element 80 are coupled with each other at their flat surfaces 81e and 80b and secured to each other by screwing a bolt 83 into the threaded hole 84 through a spring washer 88.

The above-mentioned jointed portion works as follows:
When rain water flows into the deeply counterbored portion 81c, it does not remain there but runs along a groove 88a provided, opposite the spring washer 88 and the groove 81e into the atmosphere. Although, in the above-mentioned case, the groove 81e is made in the direction of the bolt hole 81d of the first element 81, to the atmosphere side B, it may be provided in either of the first elements 81 and 80. Furthermore, it is also possible to make a plurality of grooves 81e which may take any form on its cross-section. In case of a pressure vessel the groove size may be limited so as to have less than the allowable clearance value.

The above-mentioned jointed structure, wherein two elements are joined by screwing a bolt into a deeply counterbored hole with a groove provided therein, assures that the rain water collected in the deeply counterbored hole will be discharged into the atmosphere through the slot opposite the spring washer, the bolt hole and the groove, the deeply counterbored portion may be free from corrosion as for example, the bolt sticking because of rust in the locking portion of the explosion vessel.

Furthermore, according to the ministerial ordinances for securing the safety of electrical machinery and apparatus for use in explosive gas atmospheres, the hazardous places are specified with due consideration to explosion-hazard characteristics such as the flammability limits and the flashing point of explosive gas atmospheres, vapor-generating conditions and the ignition point, fire spreading limits, the minimum ignition current and so on, and guidance is given for explosion-proof constructions for electrical machinery and apparatus in accordance with corresponding explosion-hazardous installation places. The flowmeters are basically designed to be of an explosion-proof construction since they may be frequently used for measuring the flow of explosive fluids or at places where an explosive gas atmosphere exists. However, the flowmeters of explosion-proof constructions may be higher in cost since the requirements for explosion-proof vessels in relation to their volume, joint sizes and allowances, leadin wires, separation of containers accommodating electrical devices and so on should be considered.

On the other hand, recently many flowmeters, wherein a flow-rate signal transmitted from a flowmeter body is processed and the result indicated, have been adopted. The application of flowmeters incorporating a battery as a source of supply for signal generation, calculation and indication has also been increased. The above-mentioned battery-operated electrical circuit requires only a small supply of current and consumes a small amount of electric energy thereby being intrinsically adaptable to explosion-proof applications. The battery adapted for intrinsically safe circuits is provided with a current-limiting resistance or a like element, serially connected thereto to prevent an overcurrent from occurring across a short circuit caused by a mis-operation, and furthermore it is potted or included in a suitable vessel. It is also necessary that the battery unit for use at a hazardous place should include a current-limiting element and be replacable as a complete unit. A thus-formed power supply unit is connected to the electric circuit by use of a connecting means such as a plug and connector which is removably secured to a partition wall and is operated from a switch mounted on the electric circuit side.

In the above-mentioned prior art, the battery unit is provided with a resistance or a like current-limiting element connected thereto by embedding the connections in a molded material but the other terminal of the battery and an open terminal of the resistance are connected by a connecting means to the electrical circuit through the switching means. Consequently, leaking current may flow through the connecting means and circuit components such as a switch even when the circuit is not in operation. This causes the accelerated deterioration of the battery. Furthermore, since the switch mounted on the electric circuit is operated by hand each time the power supply is switched OFF or ON, to stop and restart the circuit after a long period of stoppage, the electric circuit may become exposed to the atmosphere. This is undesirable from the standpoint of assuring the safety and durability of the device.

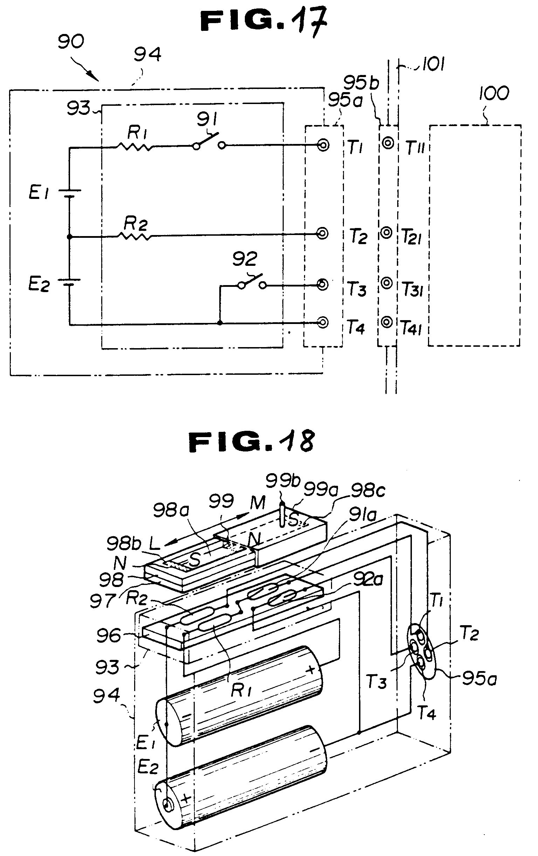

Figs.17 and 18 show a method adopted in order to solve the above-mentioned problems. Fig.17 is a circuit diagram of a power supply unit. Fig.18 is an assembly diagram of said power supply unit. In these drawings, numeral 90 is a power supply unit which includes batteries E1, E2 of a specific voltage, resistances R1, R2 are selected so as to get a specific battery short-circuit current, e.q. 30mA, and resin material 93 for unitarily molding therein resistances R1, R2 and switches 91, 92. In this case the resistances R1 and R2, the switches 91 and 92, the batteries E1 and E2 and a connecting portion 95a are molded all together to form a complete unit. The connecting portion 95a may be a socket or a connector for making a removable electrical connection, and has the terminals T1, T2, T3 and T4. Numeral 100 designates an electric circuit and numeral 101 indicates a partition which separates the power supply unit 90 from the electric circuit 100 and has a connecting portion 95b mounted thereon. The connection portions 95a and 95b are connected to each other at their corresponding terminals (T1, T11), (T2, T21), (T3, T31) and (T4, T41) to supply electric energy to the electric circuit 100. The terminal T4 is used when the total voltage of the batteries E1 and E2 is supplied through the terminal T1, and the terminal T3 is used when the voltage from the battery E2 is supplied through the terminal T2. As shown in Fig.18, the switches 91 and 92 are composed of reed switches 91a and 92a and a magnet 99 for magnetically (contactlessly from the outside) closing and opening the contacts of the reed switches 91a and 92a. The reed switches 91, 92 together with the resistances R1, R2 are disposed parallel to each other at the same surface of a circuit board 96 and are connected to the circuit according to the circuit diagram shown in Fig.17. Circuit boards 97 and 98 are of the same size as that of the circuit board 96, and are secured to each other to form a pile. However, a rectangular opening 98a is made in the board 98 and magnets 98b and 98c, magnetized in the same longitudinal direction, are secured respectively to the opposite ends of the board 98. The magnet 99, magnetized in the same direction with the magnets 98a and 98c, is used for driving the reed switches that are arranged parallel to each other at the same time. The magnet 99 is a plate magnet which has a substantially same length as those of the reed switches 91a and 92a, and has a suitable width to move within the opening 98a of the board 98. A non-magnetic guide plate 99a has the magnet 99 secured thereto, and movably covers the piled boards 97 and 98. A handle 99b is also fixed to the board 99. the boards 97 and 98 are secured to the molded resin 93 or 96 closely being opposite and parallel to the reed switches. When the handle 99b is positioned in the direction M as shown in Fig.18, the driving magnet 99 is attractively locked by the magnet 98c and turns ON the reed switches 91a and 92a. When the handle 99b is moved in the direction L against the attractive force of the magnet 98c, the reed switches 91a and 92a are turned OFF and the driving magnet 99 is attractively locked by the magnet 98b. The reed switches can be turned ON and OFF by moving the driving magnet without making contact with the reed switches. In the case shown two power supply batteries E1 and E2 are used but the power supply unit may be composed of one battery or a plurality of them.

As is apparent from the foregoing description, the above-mentioned power supply unit is so constructed that the batteries, the current limiting resistances and reed switches are unitarily molded in resin and the reed switches are turned ON and OFF by use of the driving magnet which can travel between two positions and be reliably locked in corresponding positions by the small stationary magnets. Since the circuit elements are completely buried in the molded resin not to be exposed to the atmosphere and to satisfy the requirements for intrinsically safe devices and since the reed switches with a high insulation resistance are applied to eliminate the possibility of current leaking when the circuit is open and there is no need to touch or expose any part of the electric circuit, according to the present invention, it is possible to provide a power unit which can operate with a high degree of reliability and stability for a long period of use.

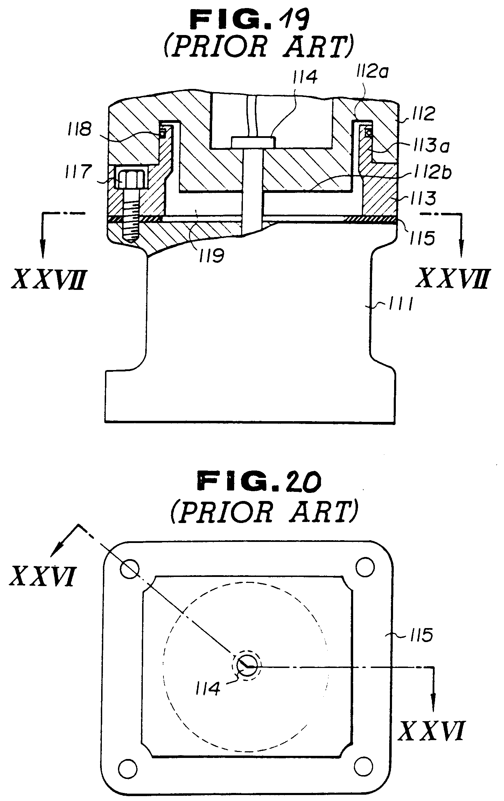

Fig.19 shows a positive displacement flowmeter which is mounted on a pipeline for measuring the flow rate of a hot fluid and is provided with a heat insulating means for preventing the transfer of heat to its counting portion. In many positive displacement flowmeters a system for converting a rotor's rotations into an electrical signal is adopted as a means for sensing the rotor's rotation. For example, a magnetic flux from a transmitting magnet embedded in the face of the rotor is sensed by a magnetic sensor which in turn generates an electrical signal to be transmitted as a pulse signal [flow rate]. The pulse signal is processed by an electric transducer mounted in a counting portion combined unitarily with the flowmeter's body and is indicated by an indicator or transmitted to a remote place. There are various kinds of fluids to be measured by the flowmeter in a variety of their physical or chemical conditions such as pressure, temperature and so on. For example, the temperature of a fluid may vary in a wide range from low to high. This means that the operational circuit of the counting portion has to operate well at temperatures varying within a wide range. Since the counting portion is directly connected to the flowmeter body, it may be affected by thermal conduction, radiation or convection if the fluid is hot. Accordingly, in this case it is necessary to protect the counting portion from possibly being effected by heat. Fig.19 is a sectional view (taken on line XXVI-XXVI of Fig.20) for explaining an example of the prior art. Fig.20 is a view taken along line XXVII-XXVII in Fig.19. In Figs.19 and 20, numeral 111 is a flowmeter body, 112 is a counting portion incorporating the operational circuit, and 113 is a skirt for connecting therethrough the flowmeter body 111 with the counting portion 112. The counting portion 112 has a ringed groove 112a for fitting therein a ring portion 113a of the skirt 113 with an O-ring 118 for air-tight sealing. A magnetic sensor 114 is applied for magnetically detecting the rotation of the flowmeter's rotor (not shown). A heat insulation 115, which is made in the form of a hollow square plate of mainly inorganic material having a high resistance to heat and low thermal conductivity such as rock wool and the like, is secured to the flowmeter body by the use of a bolt 117 to reduce the heat transfer of heat from the flowmeter body 111 to the counting portion 112.

The above-mentioned positive displacement flowmeter has a heat insulation 115 cutting off the flow of heat from the flowmeter body 111. However, the heat insulation 115 having a high resistance to heat is capable of protecting against heat transfer by conduction but it cannot prevent heat transfer by radiation. Consequently, the radiant heat from the flowmeter body 111 is directly transferred to the bottom 112b of the counting portion 112 wherein the temperature rises, resulting in that air in a closed space 119 of the counting portion 112 is heated and thereby expands to increase inner pressure. A part of the air under increased pressure is forced out of the counting portion 119 through the heat insulation 115 of the capillary structure. Therefore, air from the outside reversely enters into the counting potion when the flowmeter stops with no hot fluid in the piping and its temperature is lowered. Such repeated respirations increase the humidity of the air in the counting portion, causing dew condensation therein at a low ambient temperature. Although there are capillaries in the heat insulation, most of them are closed and cannot allow the counting portion to communicate with the outside air, thereby irrevocably causing a rise in temperature of the counting portion.

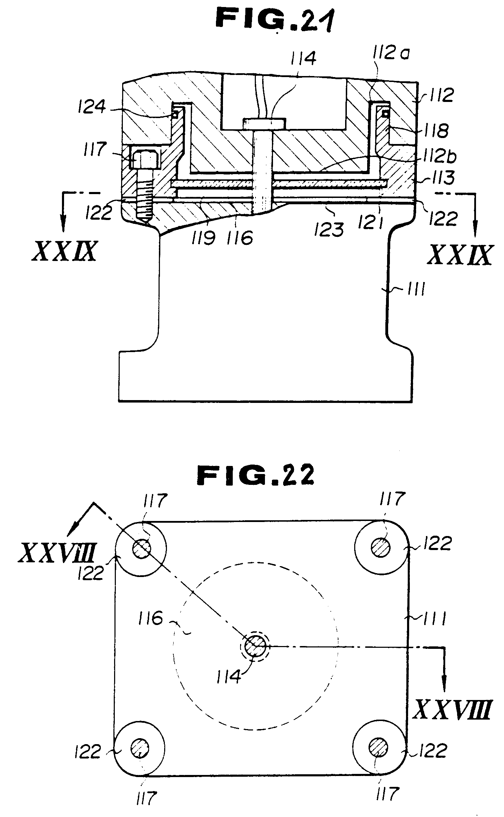

Figs.21 and 22 show a positive displacement flowmeter which is so constructed as to solve the above-mentioned problems. Fig.21 is a sectional side view taken on line XXVIII-XXVIII of Fig.22, while Fig.22 is a view taken in the direction of the arrows along line XXIX-XXIX of Fig.21. In these drawings, the elements similar to those of Figs.19 and 20 are indicated by corresponding like numerals and need no further explanation. In Figs.21 and 22, a heat insulating washer 122, made of a heat insulating material, is fitted onto a bolt 117 for threadably connecting a flowmeter body 111 with a skirt 113 and is urged between the body 111 and the skirt 113, thereby a clearance 122 is also created there-between which serves as a blow hole 123 for directly exhausting the heated air from the flowmeter body 111 into the atmosphere. The temperature's rising in the counting portion 122 is effectively prevented. A radiation shield 116 made of heat insulating material is also provided for reflecting the radiant heat and has a preferably light-reflecting surface against the flowmeter body 111. The radiant shield 116 is fitted at its periphery in a ringed groove 121 made in the inner wall's surface of the skirt 113, maintaining a gap between the radiant shield and the bottom 112b of the counting portion 112 in the space 119 so as to improve the radiant ray-reflecting effect of the radiant shield 116. Tests have proven that the heat insulating effect of the present invention is considerably higher than that of the prior art shown in Fig.19, that is, the temperature of the counting portion of the flowmeter, according to the present invention, rose to 60°C during the flowmeter's operation with a hot fluid of 120°C and at a normal ambient temperature, whereas the temperature of the counting portion of the flowmeter, according to the prior art (Fig.19), rose further to 100°C under the same operating conditions.

In the above-mentioned positive displacement flowmeter, an effective and low-cost heat insulation is realized by applying a heat insulating washer, instead of the plate type, which not only prevents the transfer of heat by conduction but also it produces a blowout hole allowing not air to escape from the space between the flowmeter body and the skirt, and by additionally providing a radiant shield for preventing a rise in temperature of the air in the space due to radiation heat. Furthermore, no moisture appears in the space by virtue of the existence of said blowout hole.

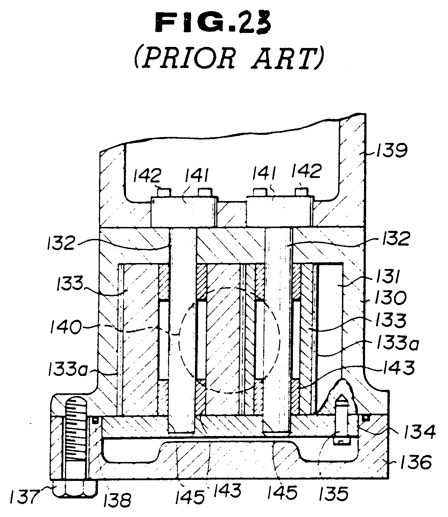

Fig.23 shows an example of a construction of a conventional positive displacement flowmeter. In Fig.23, a circle 140 indicated by a dotted line is an inlet or outlet port. The housing 130 of the flowmeter's body includes a measuring chamber 131 which has a recess communicating with the inlet/outlet port 140. In said measuring chamber 131 a pair of rotor shafts 132, 132 of the same diameters are placed parallel with each other: each rotor shaft is secured at its flanged end 141, by use of bolts 142, to the outside wall surface of the flowmeter body's housing 130 through the bottom hole of the measuring chamber and is fitted at its other end in the through hole of the chamber cover 134. A pair of rotors 133, 133 are shown as non-circular gears engaged with each other 133a. Each rotor (non-circular gear) 133 is provided with a bearing 143 by which it is rotatably mounted on the shaft 132. The paired rotors 133, 133 rotate, keeping a small clearance from the inner wall of the measuring chamber. The chamber is closed with the cover 134 having two through holes 145, 145 for fitting therein the corresponding shafts' ends. Said cover is secured to the flowmeter body's housing 130 by the use of a locating pin 135. A back cover 136 is provided with an O-ring 138 for liquid-tight sealing and secured to the flowmeter body's housing 130 by the use of a bolt 137. A counter housing 139 accommodates a counting portion (not shown) for sensing the rotors' revolutions and for indicating the measured flow rate.

In the above-mentioned conventional positive displacement flowmeter, its rotor shafts 132 are secured at their flanged ends to the housing of the flowmeter body's housing 130. The flanged shafts are large in size and relatively expensive to manufacture. Furthermore, since said shafts 132 are fitted to the other ends in the corresponding holes 145 of the face plate 134, the liquid may leak through a minute gap formed between each shaft 132 and the hole 145 of the face plate. To prevent the liquid from leaking, it is necessary to add to the back cover 136 a liquid-tight seal 138, thereby increasing the cost of the flowmeter.

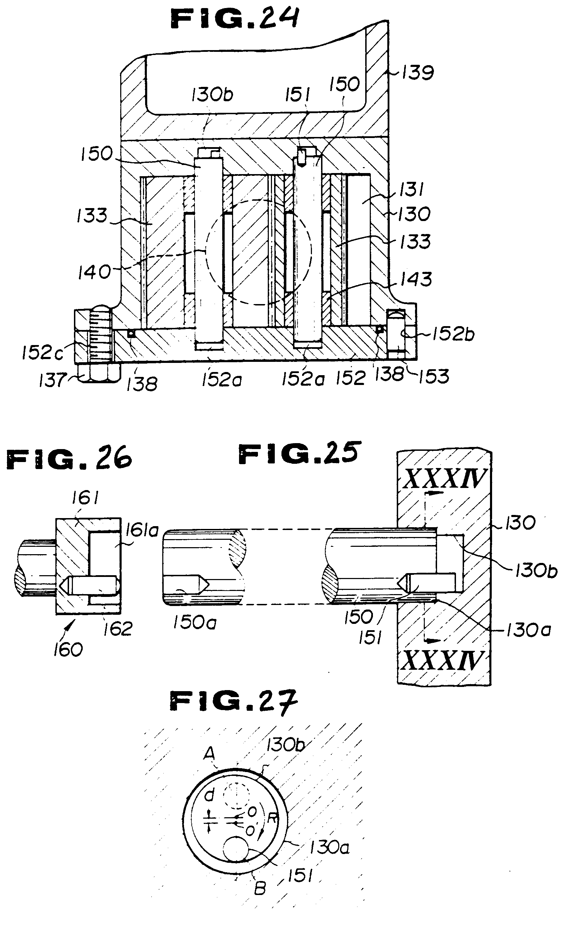

Figs.24 to 27 are views for explaining an embodiment which was made in order to solve the above-mentioned problems. Fig.24 is a sectional view showing a positive displacement flowmeter according to the present invention. The same components as those shown in Fig.23 are indicated by the same numerals and will not be explained further. In Fig.24, the rotor shaft 150 is a uniformly round cross-section and as shown in Fig.25, it has a stopping pin 151 eccentrically driven into one end face and a pin hole 150a eccentrically drilled into the other end face. Fig.25 is an enlarged detail of the rotor shaft construction. Fig.27 is a sectional view taken in the direction of the arrows along line XXXIV-XXXIV of Fig.25. In the bottom of the measuring chamber 131 of the body housing 130, two blind holes 130a of a specified depth are drilled for fitting therein the rotor shafts, and, furthermore, at the bottom of each hole 130a a hole 130b is also made by spot facing at an eccentric distance from "d" from the axis of the hole 130a. A back cover 152 has two blind holes 152a for inserting therein the other ends of the rotor shafts, a through hole 152b for fitting therein a locating pin 153 and a through hole 152c for screwing a bolt 137 for securing the back cover 152 to the body's housing 130.

In the above-mentioned positive displacement flowmeter each rotor shaft 150 is secured to the body's housing 130 by use of the shaft mounting jig 160 shown in Fig.26. The shaft mounting jig 160 comprises a columnar body 161 which has a recessed face portion 161a for inserting therein one end of the rotor shaft 150 and has a pin 162 embedded at one end in a hole made in the bottom of said recessed face portion 161a at a position corresponding to the position of the pin fitting hole 150a at the bottom end of each rotor shaft 150. The end of the shaft 150 is inserted into the recessed face portion 161a of the columnar body 161 of the shaft mounting jig 160 so as to receive the pin 162 in its hole 150a. In this case the stopping pin 151 is placed at position A in the off-centered (eccentric) hole 130b. The shaft 150 is then turned in the direction of the arrows R. The shaft is bound when the stopping pin 151 is urged to its side surface against the inner wall of the off-centered hole 130a at the position B. At this time both shafts 150 are fitted at their other ends in the corresponding holes 152a, 152a provided in the back cover 152 fixed in position by the locating pin 153. The shafts are thus secured at both ends. Since the shaft holes 152a, 152a and 130a, 130a and the off-centered holes 130b, 130b are not drilled through the back cover 152 and the body housing 130, it is unnecessary to use the face plate 134 applied in the prior art.

According to the present invention, it is possible to provide an inexpensive positive displacement flowmeter in which its rotor shafts 150 are of a uniformly round cross-section and can be secured simply by turning them until the stopping pins 151 are urged against the inner wall of the corresponding off-centered holes 130b the body housing 130, which does not require a face plate 134.

Non-circular gears which are used in pairs as rotors of the positive displacement flowmeter have teeth usually cut by use of a basic straight rack at a constant pressure angle. The tooth profile is an involute obtained as a trace of rolling contact between a straight line of the basic rack and a pitch curve of the non-circular gear, i.e. the gear teeth are cut according to an approximately non-circular pitch line with which each partial curvature centers. Accordingly, a partially curved center of the non-circular pitch line does not coincide with the rotating center of the non-circular gear.

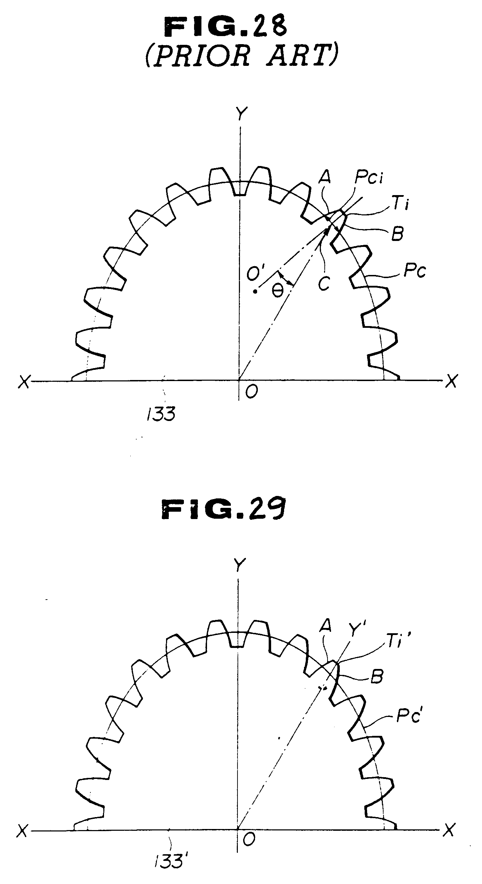

Fig.28 shows the upper half, taken on a minor axis X-X, of the above-mentioned conventional non-circular gear 133. In Fig.28, the rotating axis of the non-circular gear and its pitch line (curve) are indicated by characters O and Pc respectively. A tooth profile Ti (i=1,2,..., i,.., n) of the gear can be obtained by cutting the teeth in a circle having a partial profile center O' and including a part of the partial pitch line Pci. Since the partial pitch line center O' is apart from the rotating center of the non-circular gear 133, an angle ϑ is formed between the center of the partial pitch line Pci of the teeth profile, the center O' of said teeth profile and the rotating center O of the non-circular gear 133. The angle ϑ varies its value for every part of the pitch line (i.e. for each tooth profile position). Accordingly, the profiling of each tooth is made according to a line passing through the partial profile center O' and by not passing through the rotating center O of the non-circular gear.

The above-mentioned conventional non-circular gear is manufactured by the powder metallurgy compression, molding method that includes the following process:
(1) An amount of prepared metal powder is placed into a mold for molding a non-circular gear from powdered metal by means of compression. The powdered metal is compressed in the mold from both top and bottom into the shape of a non-circular gear which is then taken out of the mold.
(2) The compressed metal powder is then heated in order to get a sintered metal powder, non-circular gear.
(3) The sintered metal powder is compressed into a reforming mold from both top and bottom sides in order to obtain a highly precise and a highly dense metal powder sintered non-circular gear.

In general, when powdered metal is compressed in a mold from the top and bottom sides, the metal flows or is deformed radially from the mold's center in a direction perpendicular to the direction of the compressing force, thereby being densely pressed against the inner wall of the mold to be formed into the desired shape. In the case of the compression molding of the non-circular gear, the powdered metal flows radially from the gear's rotating center and is formed into the shape of the non-circular gear according to the shape of the mold's inner wall. However, in the case of compression molding of the conventional non-circular gear shown in Fig.28, a tooth's surface A is subjected to pressure in the direction of arrow C, but the tooth's surface B scarcely receives the pressure in the direction of arrow C since it has a part that is at a negative angle to the direction of arrow C. Consequently, the work molded by compression has a higher powder metal density at the tooth's surface A than at the tooth's surface B, i.e. the powder metal's density varies between the tooth's surfaces A and B.

The difference in metal density adversely affects the accuracy of the tooth's profile and the tooth's strength, as for example, in the sintering process (2) the work is subjected to the deformation of the teeth due to the differences in the thermal expansion of the metal, i.e. each tooth is bent toward the tooth's surface B of a lower powder-metal density. When the deformed non-circular gear is compressed in a re-forming mold in the next process, it receives a reverse force applied to each tooth from its surface B for correcting the deformed tooth in the mold, thereby cracking may be caused at the flanks of the gear's teeth. The difference in molding pressures at the teeth's surfaces may shorten the lifetime of the mold or cause damage to the mold in an extreme case. In the post, it was very hard to effectively produce low cost non-circular gears with a high accuracy and a high density by compressing and sintering highly shrinkable powdered metal such as stainless alloys or the like.

In the case of forming the above-mentioned conventional non-circular gear by plastic molding, heat extrusion and cold drawing, the same problem mentioned above in powder metal compression molding exists.

Fig.29 is a view showing, by way of example, a non-circular gear which is free from the above-mentioned problem. Fig.29 shows the upper half, taken on the minor axis X-X, of the above-mentioned non-circular gear. A tooth's profile Ti (i=1,2,., i, .., n) formed with a pitch line Pc' of the non-circular gear 133' has the axis line O-Y' passing through the rotating center O. Consequently, when an amount of powdered metal is compressed in a compression mold, both surfaces, A and B, of each tooth, having the profile Ti' receive substantially an even force and, therefore, the metal can be compressed to an even density. Therefore, in the primary sintering process, the compressed powdered metal of the non-circular gear can almost uniformly shrink toward the rotating center O. Since the shrunk non-circular gear has a scarcely deformed tooth profile, in the secondary compression process it can be reformed uniformly in a mold. The reforming force effecting the gear teeth is very small in comparison with the conventional non-circular gear, and therefore the production yields are improved.

The non-circular gear shown in Fig.29 is also suitable to be formed by resin molding and can be made effectively by hot extrusion and cold drawing.

In the positive displacement flowmeter the rotor's rotation is indicated mechanically through a reduction gearing and electrically through a rotation sensor converting it into an electrical signal. Many optical sensors and magneto-electric transducer-type contactless sensors are applied for directly sensing the rotation of the rotor. There are two types of optical sensors - reflecting and transmitting. However, these optical sensors can be applied only for light-transmitting fluids, the kinds of which may be limited. On the other hand, magneto-electric transducer type sensors can be applied for many kinds of fluids and, therefore, they are preferable for adoption in many positive displacement flowmeters. Magnetic sensors such as a hall device, magnetic resistors and so on are used as a magneto-electric transducer which is capable of sensing a magnetic flux from a transmitting magnet embedded in a rotor of the flowmeter.

However, the above-mentioned magnetic sensors cannot be applied to magnetic fluids effecting the distribution of magnetic flux of the transmitting magnet and they are also limited by its working temperature. Usually, magnetic sensors of this type can operate at relatively low temperatures (max. working temperature of about 80-100°C) and therefore in many cases they cannot directly detect the rotor's rotation. In addition, they must be provided with alternate power supply sources. This means that in the case of the long-term measurement of fluid by a simple method, for example, when an integrating flowmeter with a battery power supply being used for the measurement of the total flow of city water or city gas, an additional power supply for the sensor unit increased both the manufacturing and running costs of the flowmeter and restricted its application field.

The present invention is intended to provide a magnetic sensor which utilizes the characteristics of amorphous metal and does not need a battery powered supply of energy.

Amorphous metal is obtained by quenching the molten metal into a solid state at the high cooling speed of 1000°/msec. Amorphous metal is available in the form of thin plates, thin wire, powder etc.. When a metal from its molten state (i.e. a state of active molecular movement) is rapidly cooled with no time to be crystallized, it becomes amorphous, i.e. a solid that has no crystals and which is homogeneous and easy to become an alloy. For this reason many amorphous alloys, having excellent mechanical properties, being resistant to corrosion and having magnetic characteristics, are produced. Especially, a Fe-Si-B system amorphous fiber (hereinafter called as AMF) has a small coercive force Hc of 0.4 Oe (oersteds) and is featured by its magnetic hysteresis curve. Accordingly, when the magnetic intensity exceeds 0.4 Oe, there arises an abrupt change in magnetic flux density, i.e. a Barkhousen jump according to the magnetic hysteresis curve.

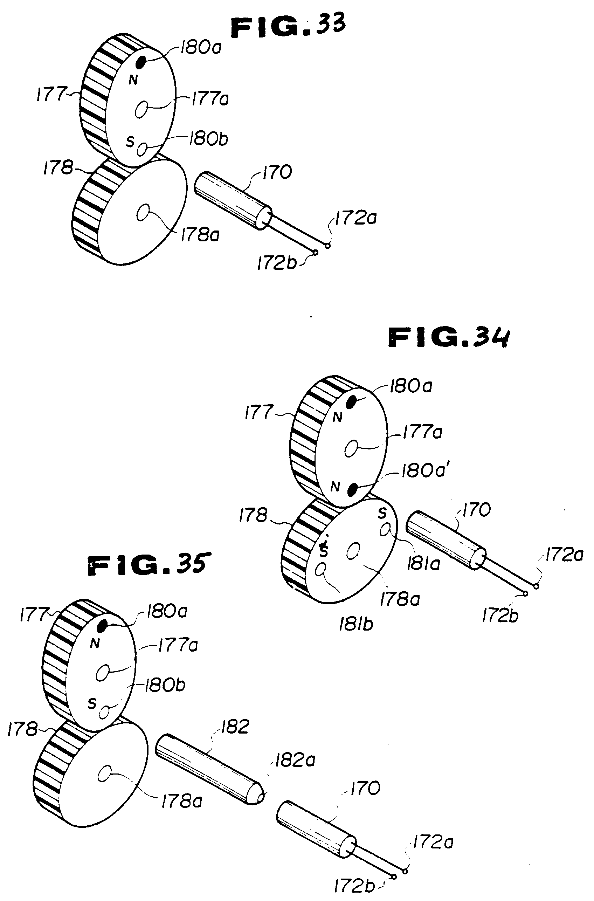

Fig.31 shows an example of a magnetic sensor utilizing the above-mentioned effect. As shown in Fig.31, the magnetic sensor 170 is composed of a magnetically sensing element 171 made of a single piece or a bundle of AMF, a coil 172 wound around the sending element and a protecting case 173 made of a non-magnetic material for accommodating therein the coil-wound sensing element. The magnetic sensor 170 produces an output at terminals 172a and 172b of the coil 172. In Fig.31, when a magnet is approached to a face 173a of the case 173, the AMF and produces the Barkhausen jump, i.e. it instantly changes the magnetic flux density into /2Bm/ at a coercive force of over +Hc, thereby a voltage corresponding to the change of the magnetic flux density is produced at the coil 172.

Fig.32 shows an outline of a positive displacement flowmeter provided with the above-mentioned AMF magnetic sensor 170. In a measuring chamber 179 of the flowmeter body housing 176 having a flow inlet 174 and a flow outlet 175 there is a pair of non-circular gears 177 and 178 (hereinafter referred to as rotors 177 and 178) which are fitted onto shafts 177a and 178a respectively and which engage with each other. The difference of inlet 174 and outlet 175 pressures causes the rotors 177 and 178 to rotate in the direction of R when fluid flows in the direction of the arrow Q. Since a flow rate is proportional to the rotations of the rotors 177, 178, it can be measured by sensing the rotation of either rotor 177 or 178.

Fig.33 is a view showing an embodiment of the present invention. Rotors 177 and 178 rotate, engaging with each other in the same way as the rotors shown in Fig.32, and they are indicated by corresponding like numerals. The body housing 176 and other construction elements shown in Fig.32 are omitted in Fig.33. A magnetic sensor is indicated by a like reference numeral (170). Fig.33 shows a basic construction of the embodiment. A rotor 177 has two transmitting magnets 180a and 180b which are embedded flush with the face of the rotor at opposite points where a major axis of the rotor (non-circular gear) is intersected by a concentric circle having a common center 177a. The exposed surface (north pole) of the transmitting magnet 180a is indicated by a small black circle, and the exposed surface (south pole) of the transmitting magnet 180b is indicated by a small white circle. the magnetic sensor 170 is mounted on the housing 176 or like suitable element at a place where it can oppose the transmitting magnets 180a and 180b by turns when the rotors 177 and 178 rotate. 2 pulses per rotation of the rotor 177 are transmitted as flow rate signals.

Fig.34 shows another embodiment wherein a rotor 177 has two magnets 180a and 180a' embedded with like north poles exposed at opposite points whereat a major axis of the rotor 177 is intersected by a concentric circle having a common center 177a, and a rotor 178 has two magnets 181a and 181b embedded with like south poles exposed at opposite points where a major axis of the rotor 178 is intersected by a concentric circle having a common center 178a. 4 pulses per rotation of the rotors are generated as flow rate signals, i.e., the resolution of the pulse signals of this embodiment is two times higher than that of the basic embodiment shown in Fig.33.

Fig.35 shows another embodiment wherein a yoke 182 of highly permeable material such as permalloy is provided between a rotor 177 having two magnets 180a and 180b (in the same way as shown in Fig.33) and a magnetic sensor 170. Since a signal from the transmitting magnet 180a or 180b may be attenuated by a leakage flux at the yoke 182 in the way of the magnetic sensor 170, the yoke 182 is formed as being larger in diameter than the magnets 180a, 180b for the purpose of decreasing magnetic resistance (reluctance) and to have tapered ends 182a facing the magnetic sensor 170.

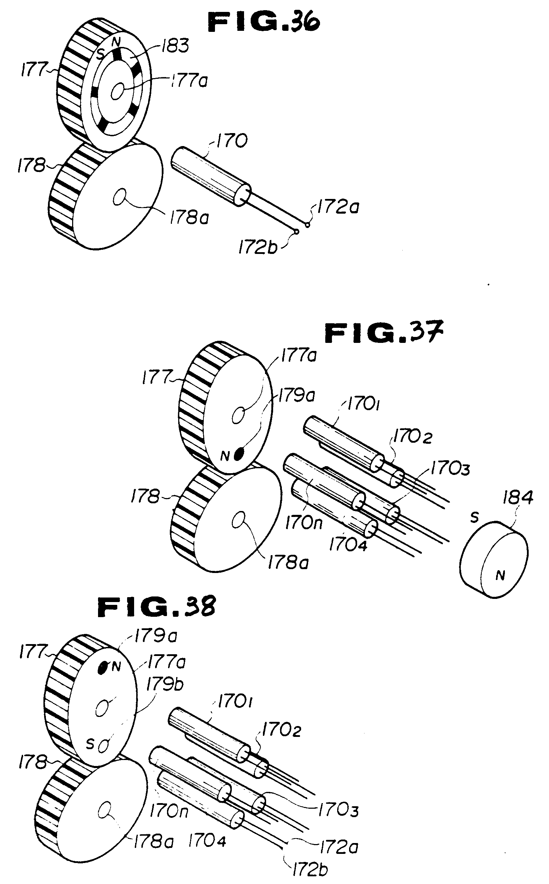

Fig.36 shows another embodiment wherein a ring magnet 183 is embedded in the face of a rotor 177 to form a concentric ring having a common center 177a and being flush with the rotor's face. The ring magnet 183 is composed of a plurality of magnets (segments) arranged in a circle and magnetized with unlike poles next to each other. The purpose of this embodiment is to increase the number of pulse signals per rotation of the rotor 177.

Figs.37 and 38 show embodiments wherein a plurality of magnetic sensors 170 are provided in order to achieve the same purpose as that of the embodiment of Fig.36, i.e. to obtain an increased number of pulse signals for one rotation of the rotor 177.

In Fig.37, a rotor 177 has a transmitting magnet 179a embedded therein with its north pole exposed and a plurality of magnetic sensors 170₁, 170₂, 170₃, 170₄,..., 170ₙ. A circular magnet 184 has substantially the same diameter as that of the orbiting circle of the magnet 179a and is opposite to its unlike south pole to the magnet 179a.

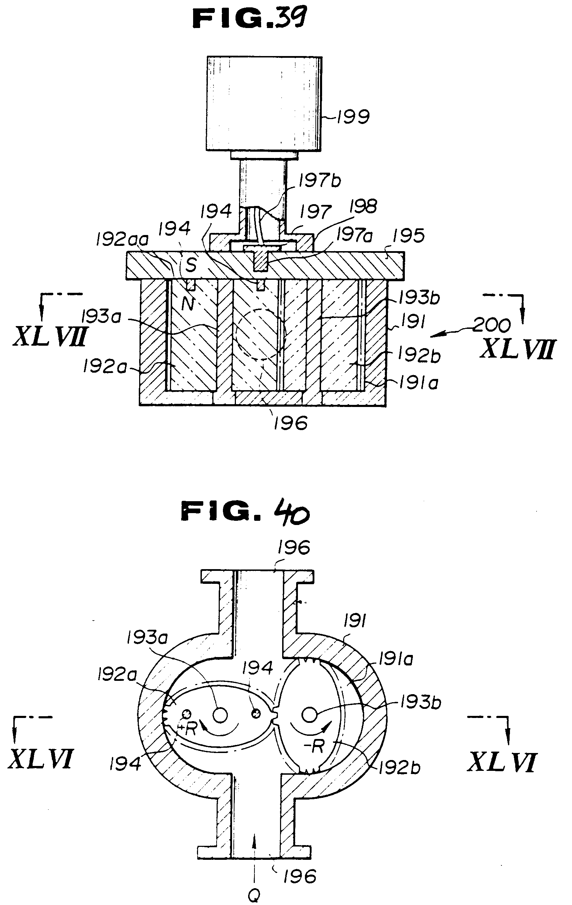

In Fig.38, a rotor 177 has two transmitting magnets 179a and 179b embedded therein (the same as shown in Fig.40) and plurality of magnetic sensors 170₁ , 170₂ , 170₃ , ..., 170n are disposed opposite along a rotating circle of the transmitting magnet 179a and 179b. Since the magnetic sensors 170 have a high sensitivity, the transmitting magnets of a compact size can be used and each sensor is capable of producing pulse signals of the flow rate at its terminals 172a and 172b with no power supply.

As is apparent from the foregoing description, since all of the above-mentioned magnetic sensors according to the present invention can transmit the flow-rate pulse signals without power being supplied and are sensitive enough to detect magnetism of simple and compact magnets, it is possible to provide a highly sensitive flowmeter having light rotors. By virtue of the excellent performance of the magnetic sensors at high temperatures, the application range of the flowmeter is also widened to various kinds of fluids with high temperatures.

A large majority of positive displacement flowmeters are intended to carry out measurements of flow by detecting the rotations of a pair of rotors, which rotate in accordance with the flow rate of a fluid in a measuring chamber provided between an inlet port and an outlet port of the flowmeter's body, and also to employ such a detection system that magnetic flux, generated by a transmitting magnet embedded in the face of the rotor, is sensed by a magnetic sensor mounted on a housing.

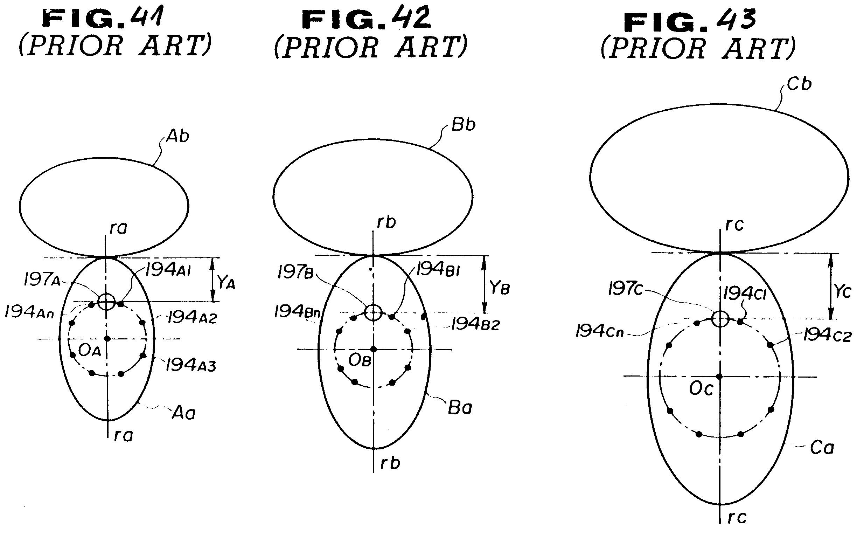

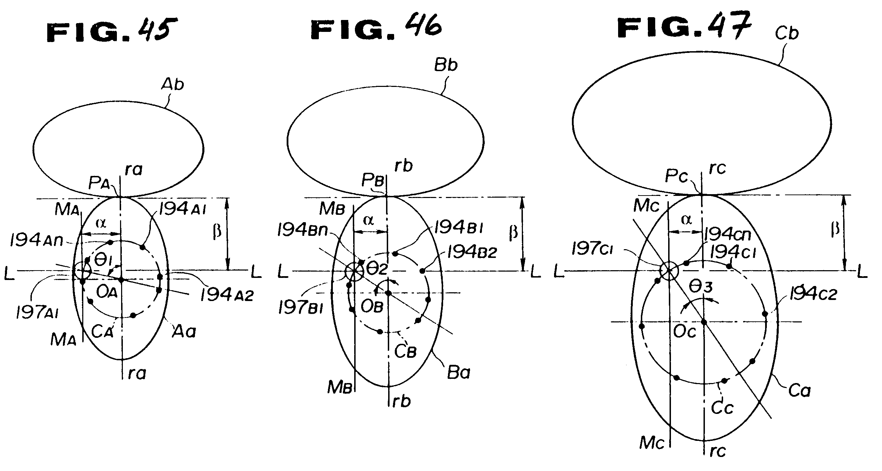

Figs.39 and 40 show an example of a construction of said positive displacement flowmeter. Fig.46 is a section taken in the direction of the arrows XLVI-XLVI in Fig.40, and Fig.41 is a section taken in the direction of arrows XLVII-XLVII in Fig.39. In Figs.39 and 40, numeral 200 indicates a flowmeter's body composed of a housing 191, rotor shafts (hereinafter called "shaft") 193a, 193b and rotating non-circular gears (hereinafter called "rotor") 192a, 192b. The rotors 192a and 192b are rotatably mounted onto the shafts 193a and 193b respectively and disposed in the measuring chamber 191a and recessed in the housing 191, in such a way that they may rotatably mesh with each other. Column-shaped transmitting magnets 194, 194 magnetized in an axial direction are embedded in the face 192aa of the rotor 192 at opposite places on the major axis of the rotor 192a at an equi-distance from the rotating center 193a. Numeral 196 indicates inlet and outlet ports made in the body 200 for leading the fluid's flow into/from the measuring chamber 191a, and the numeral 195 indicates a sensor mounting cover which closes the measuring chamber 191a in such a way as to obtain the smooth rotation of the rotors 192a and 192b by providing a minute clearance from the tips of the teeth of the rotors 192a and 192b rotating in the measuring chamber 191a, which is also used for mounting thereon a sensor 197 placed opposite to the rotor 192 having the transmitting magnets 194 and 194. The sensor 197 includes a magnetic sensor such as a magnetic resistor, a hall element and the like in its bottom portion 197a whereto the transmitting magnets 194 and 194 can approach when the rotors rotate. A lead wire 197b, for transmitting therethrough a detection signal from the magnetic sensor 197 to a counting portion 199, is laid in a mounting column 198 which is secured to the sensor mounting cover 195 and supports the counting portion 199. The counting portion 199 receives rotor rotation signals from the magnetic sensor through the lead wire 197b and calculates the momentary flow, total flow etc. and indicates the calculation results, e.g. in the above-mentioned positive displacement flowmeter, when a fluid flows in the measuring chamber in the direction of arrow Q, paired rotors 192a and 192b rotate in the directions indicated by arrows +R and -R respectively by the action of the differential torque appearing alternately through every 90° of their rotation about the shafts 193a and 193b. The rotations of the paired rotors are detected by the sensor 197 which detects a magnetic flux from the magnets 194 and 195 rotating about the rotor's shaft and alternately approaching thereto, generates a signal proportional to the flow rate and transmits it to the counting portion 199.

The above-mentioned positive displacement flowmeter is capable of directly detecting the rotor's rotations and is featured by simple and accurate measurements of the fluid's flow by virtue of a small load for the flow's detection. However, a flowmeter of this type, in common with other types, have the disadvantage that, in order to cover a wide range of flow measurements, it is necessary to prepare variations of bodies which incorporate rotors being similar in form but different in size and which are selectively used depending on the required measurement range of fluid flow to be measured.

Figs.41 to 43 are views showing mutual arrangements of sensors and transmitting magnets of a variety of rotors.

Fig.41 shows pitch curves Aa, Ab of rotors for small flow measurements, and Figs.42 and 43 show pitch curves Ba, Bb and Ca, Cb respectively for middle and large flow measurements. A plurality of transmitting magnets (194A1, 194A2,..., 194An), (194B1, 194B2,..., 194Bn) and (194C1, 194C2,..., 194Cn) are embedded in faces of corresponding rotors Aa, Ba and Ca in such a way that they are arranged on a circle having corresponding rotation centers OA, OB, OC at pitch intervals proportional to rotation speeds of corresponding pairs of rotors (non-circular gears) engaging with each other. The positions of the magnetic sensors corresponding to the above-mentioned transmitting magnets are indicated by numerals 197A, 197B, 197C respectively. Each of the sensors (197A, 197B, 197C) is disposed on a major axis (ra-ra, rb-rb, rc-rc) of a rotor (Aa, Ba, Ca) being apart at a specified distance (YA, YB, YC) from the intersection of the major axis (ra-ra, rb-rb, rc-rc) and the pitch circle (Aa, Ba, Ca).

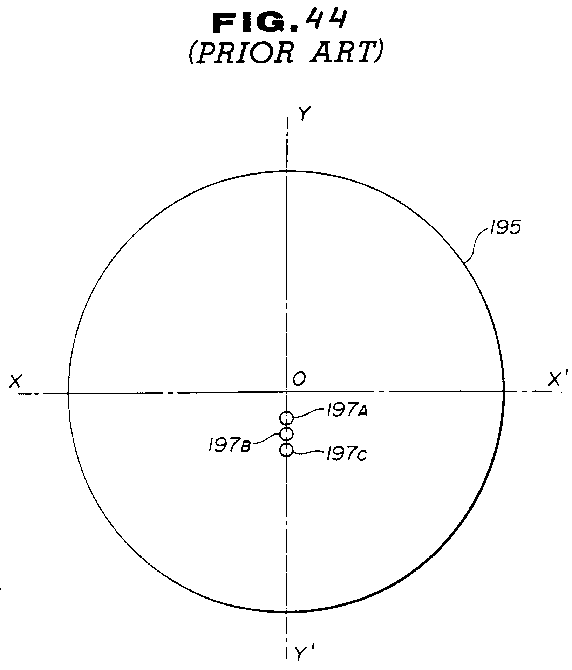

Fig.44 shows a cover 195 whereon the sensors' positions 197A, 197B, 197C shown in Figs.41 to 43 are indicated. As is apparent from Fig.51, if the sensor mounting cover 195 and the counting portion 199 are made in the same sizes for variations of flowmeter bodies, it is also necessary to prepare respective covers that are the same size but differ from each other by the sensor mounting positions (i.q. 197A, 197B, 197C).

Figs.45 to 47 are views showing the mutual arrangements of rotors (transmitting magnets) and sensors according to the present invention, wherein the sensors' mounting positions are changed from those of the conventional flowmeters shown in Fig.39. Variations of flowmeters shown in Figs.45 to 47 are similar to those shown in Figs.41 to 43 respectively. Pairs of rotors are indicated by their pitch circles (Aa, Ab), (Ba, Bb), (Ca, Cb) respectively. In order to increase the resolution of each flowmeter a number "n" of transmitting magnets [(194A1, 194A2,.., 194An), (194B1, 194B2,.., 194Bn), (194C1, 194C2,.., 194Cn)] are embedded in the faces of the rotor (Aa, Ba, Ca) in such a manner that they are arranged on a circle having a common center (OA, OB, OC) with the rotor. Magnetic sensors corresponding to the above-mentioned transmitting magnets are mounted on corresponding covers and their positions are indicated by numerals 197A1, 197B1, 197C1 respectively. The position of each sensor (197A1, 197B1, 197C1) is defined by a constant distance β between a point (PA, PB, PC) whereat the rotor (Aa, Ba, Ca) engages at its major axis with a matching rotor (Ab, Bb, Cb) and a point whereat an axial line L-L of the sensor intersects with the rotor's major axis at light angles, and by a constant distance α from a point whereat the sensor's axial line L-L perpendicularly intersects with the rotor's major axis, and by that the line (MA-MA, MB-MB, MC-MC) passing the sensor's center and being perpendicular to a minor axis of the rotor and a rotation circle (CA, CB, CC) of the transmitting magnets have an intersection being on a common trace of the rotation of the magnets of rotors rotating in a variety of bodies. Accordingly, a cover with a sensor mounted thereon at the point corresponding to a common point of rotation circles of the magnets of different type rotors are used commonly for variations of rotors, that is, for variations of flowmeter bodies. Although in the above-mentioned embodiments rotors with a plurality of transmitting magnets are used, it is also possible to use rotors having a single magnet embedded therein.

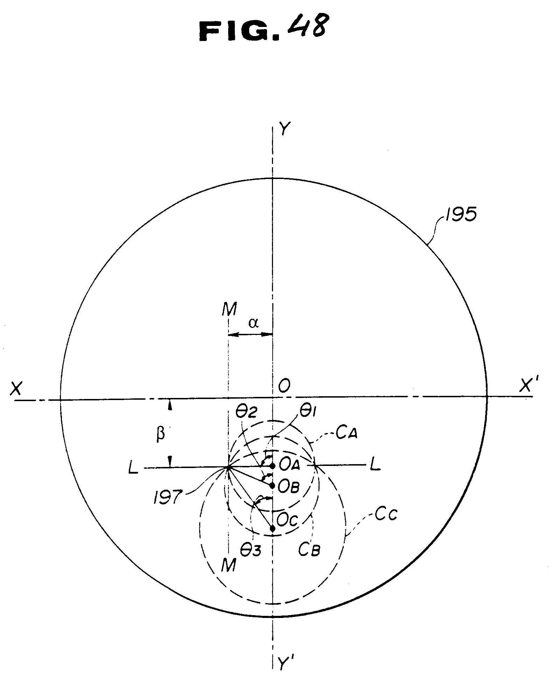

Fig.48 shows a sensor mounting cover 195 with a sensor 197 secured thereon at a position of -β and -α relative to the orthogonal lines X-X' and Y-Y' passing a center O of the cover. Rotation axes of rotors Aa, Ab, Ac are indicated by the characters OA, OB, OC respectively and they are at angles of ϑ1, ϑ2, ϑ3 to the sensor position and the line Y-Y'. Rotation circles CA, CB, CC of transmitting magnets are indicated by dotted lines. The cover 195 having the sensor 197 thus positioned thereon can be commonly used for a variety of flowmeters. This cover is also used with the same counting portion 199, that is, the sensor-mounted cover provided with the counting portion 199 is adopted as a common unit adapted for a variety of flowmeter bodies. The above-mentioned sensor-mounted cover 195 cannot be applied for flowmeters' bodies including small sized rotors and, more particularly, for rotors being so small in size as to obtain no common intersection of the lines L-L and M-M and the rotation circles of the transmitting magnets.

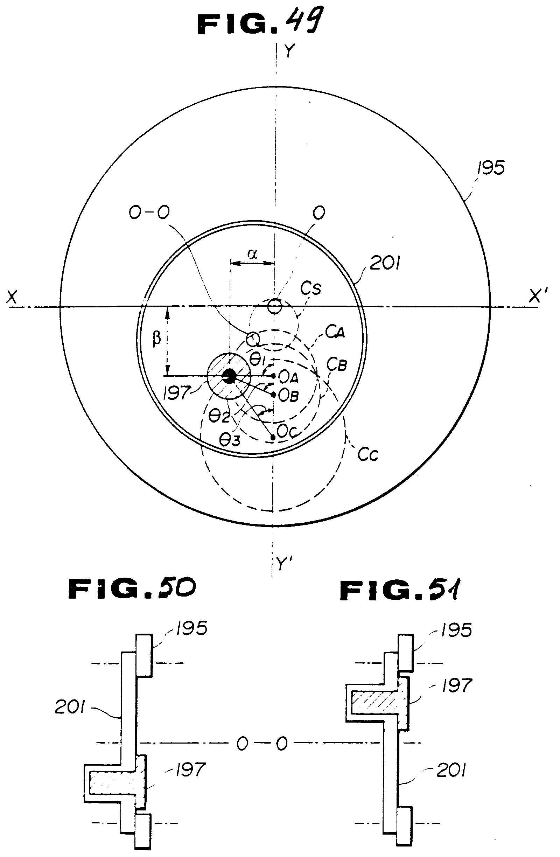

Fig.49 shows another embodiment of the present invention made to provide a cover applicable for the above-mentioned small flowmeters' bodies. In Fig.49, an auxiliary sensing cover 201 is a disc having as its center O-O at a half of a line connecting a center of the sensor 197 mounted thereon with the center O of the cover 195. This auxiliary cover 201 is mounted on the cover 195 in such a way as to be rotatable by 180° about the center O-O, that is, turning the auxiliary cover allows the sensor 197 to be placed at the center O whereat the sensor can be opposed to a rotating circle Cs of a transmitting magnet of a small type flowmeter. Practically, the auxiliary sensor-mounted cover 201 is turned about the center O-O to the opposite position and fixed to the cover 195 by use of screws or the like as shown in Fig.57 and 58. Although the above-mentioned cover 195 serves to cover the flowmeter's body and also to mount thereon a magnetic sensor, it is also possible to assemble separate plates - a cover and a sensor mounting plate. The purpose of the present invention is to obtain a constant mutual arrangement of magnets embedded in a rotor and a sensor mounted on a flowmeter's body independent of a variety of flowmeters. Accordingly. transmitting elements are not limited to only magnets but may be optical reflecting elements.

As is apparent from the foregoing description, the transmitting system of the positive displacement flowmeter, according to present invention, makes it possible to use the same cover and the same counting portion for a variety of the flowmeters' bodies of different measurement ranges, and therefore to reduce a number of component parts, simplify the manufacturing process and reduce the number of assembling steps of the flowmeters. Furthermore, it produces many other effects such as an increased interchangeability of the flowmeters etc..

## Claims

1. A positive displacement flowmeter including a pair of non-circular gears, serving as paired rotors and having teeth cut along a pitch circle to a profile substantially aligned with the gear rotation center, characterized in that the non-circular gears made of sintered metal are used.

2. A positive displacement flowmeter including a pair of non-circular gears serving as paired rotors and having teeth cut along a pitch circle to a profile substantially aligned with the gear rotation center, characterized in that the non-circular gears made of molded resin are used.

3. A positive displacement flowmeter for measuring a flow of fluid passing through a pair of rotors rotating about respective shafts secured in a measuring chamber of a body by sensing the rotor's rotation corresponding to the fluid's flow, characterized in that each rotor's shaft-column of equal diameter has a locking pin driven eccentrically in one end-face thereof and is lockable in the measuring chamber by inserting its one end having the locking pin into a shaft-receiving hole drilled in an inner face wall of the measuring chamber and a pin-receiving hole drilled eccentrically in the bottom of the shaft receiving hole, by turning the shaft to press the locking pin to an inner wall of the hole, and by inserting its other end into a hole drilled in a back cover serving as a face plate of a measuring chamber and being secured with a liquid-tight seal to the body.

4. A construction of a positive displacement flowmeter, comprising a covering plate having a bent rectangular tongue formed at its circumferential portion, a housing having an annular seat formed on its inner wall for placing thereon a circumferential portion of the covering plate and having a vertical slot made in its inner wall for locking the bent rectangular tongue, and a cover for clamping the cover plate, characterized in that the cover plate is lockable between the housing and the cover not to allow the cover plate to move and turn.

5. A push-button switch for a positive displacement flowmeter, comprising a non-magnetic housing having a reed switch chamber and a push-button chamber, said two chambers being separated from each other by a partition wall, a reed switch secured in the reed switch chamber and a push-button having a magnet embedded therein, said push-button being movable in a direction of depth and being normally locked in its extended position by the force of a spring and, said reed switch being normally open and operable to close by pressing the push-button, characterized in that the push-button chamber has a rectangular section in the direction of the push-button movement therein and the push-button is provided with a flange of a rectangular shape in its section for guiding the push-button loosely inserted into the push-button chamber.

6. A push-button switch for a positive displacement flowmeter according to claim 5, characterized in that a square pole magnet magnetized in its longitudinal direction is adhesively fitted at its center portion in a grooved face of a holding column to form a magnetic column unit which is fitted in a push-button body with its magnetic surface being flush with the push-button body's face.

7. A jointing construction for a positive displacement flowmeter, comprising a first-member having a deeply counterbored through-hole drilled in its end and a second-member having a blind threaded hole in its end face matching with the first element end, two said members being connected at their matching planes with each other by use of a bolt with a spring washer or the like jointing means, characterized in that at least one of the first and second elements has a groove made in its matching surface for communicating at its starting end with the bolt hole and terminating at its open end in the element's external surface exposed to the atmosphere.

8. A power supply unit for a positive displacement flowmeter, comprising a resin-molded power source including therein a battery with a current limiting resistance of specified resistance connected therewith in series, an electric circuit drivable from the power source, said power source and said electric circuit being housed in a separate electric device container, and a switch for switching ON and OFF the power source for supplying the electric circuit, characterized in that a switch not exposed to the atmosphere is operably and unitarily molded in the power source.

9. A power supply unit for a positive displacement flowmeter according to claim 8, characterized in that a switch is composed of a reed switch, a reed switch-driving magnet slidably mounted on a molded unit to be opposite, closed to and parallel to the reed switch, a locking means for locking the reed switch-driving magnet in a switching ON position or a switching OFF position by use of an attracting magnet of like polarity.

10. A heat insulating construction for a positive displacement flowmeter, comprising a body mountable in a pipe line and incorporating in its measuring chamber a pair of rotors rotatable in accordance with a flow of fluid passing therethrough, a counting portion for sensing a rotation of the rotors and calculating a fluid's flow from a detection signal, and a ring skirt being placed between the body and the counting portion, characterized in that the ring skirt is secured to the body through a heat insulating washer to create a gap there-between.

11. A heat insulating construction for a positive displacement flowmeter according to claim 10, characterized in that the ring skirt is provided with a heat shielding plate fitted therein, and the counting portion is unitarily fitted onto the ring skirt to be internally separated by the heat shielding plate.

12. A transmitter for a positive displacement flowmeter, comprising a transmitting magnet embedded in the face of one of a paired rotor, rotatable in proportion to a flow of fluid passing through a measuring chamber, having an inlet and an outlet and a magnetic sensor disposed in opposition to the transmitting magnet for the purpose of sensing the rotor's rotation and generating a corresponding flow signal, characterized in that the magnetic sensor made of amorphous metal fibers with a coil wound thereon is used to produce a flow signal in the form of a pulse voltage at its coil due to the Barkhausen effect.

13. A transmitter for a positive displacement flowmeter, according to claim 12, characterized in that a small rod yoke having a small coercive force is disposed between the transmitter and the magnetic sensor.

14. A transmitter for a positive displacement flowmeter, according to claim 12 or 13, characterized in that a plurality of transmitting magnets are embedded in a rotor's face to form thereon a concentric magnetic ring having a plurality of poles exposed flush therewith.

15. A transmitter for a positive displacement flowmeter, according to claim 12, 13 or 14, characterized in that a plurality of magnetic sensors are arranged in a circle corresponding to a circular orbit of a transmitting magnet.

16. A transmitting system for a positive displacement flowmeter comprising plural types of bodies including different pairs of rotors, which being similar in shape and different in size for different ranges of flow measurement, each pair of rotors rotatably mounted on respective shafts secured in a measuring chamber and one of the rotors having a transmitting magnet embedded in its face, a detecting cover having a magnetic sensor mounted therein in opposite to the magnet embedded in the rotor for detection of the rotor's rotation and a counting portion for calculating the fluid's flow according to a signal from the magnetic sensor and indicating the calculation result, characterized in that the sensor is mounted at a position on the detection cover that corresponds to a common point (intersection) of different circular orbits of transmitting magnets of rotors of different sizes in different types of bodies.

17. A transmitting system for a positive displacement flowmeter according to claim 16, characterized in that in the flowmeter, including a pair of non-circular gear serving as paired rotors, a sensor is disposed at such a position on the detection cover that corresponds to a common point (intersection) of two lines: one line being perpendicular to different circular orbits of transmitting magnets of non-circular gears (rotors) in different types of bodies and apart by an equi-distance from pitch points on major axes of the non-circular gears of different sizes and another line being perpendicular to minor axes of the non-circular gears of different sizes and apart by an equi-distance from the major axes of the non-circular gears of different sizes.

18. A transmitting system for a positive displacement flowmeter according to claim 16 or 17, characterized in that an auxiliary detection cover with a sensor fitted therein is mounted on the main cover to be rotatable about an axis being at a half distance between the main cover's center and the sensor's center.
